(19) Europäisches Patentamt / European Patent Office / Office européen des brevets

(11) **EP 2 926 277 B1**

(12) **FASCICULE DE BREVET EUROPEEN**

(45) Date de publication et mention de la délivrance du brevet:
**19.10.2016 Bulletin 2016/42**

(21) Numéro de dépôt: **13799030.5**

(22) Date de dépôt: **29.11.2013**

(51) Int Cl.:
**G06F 17/50** $^{(2006.01)}$

(86) Numéro de dépôt international:
**PCT/EP2013/075099**

(87) Numéro de publication internationale:
**WO 2014/083159 (05.06.2014 Gazette 2014/23)**

(54) **PROCÉDÉ DE DURCISSEMENT LOGIQUE PAR PARTITIONNEMENT D'UN CIRCUIT ÉLECTRONIQUE**

VERFAHREN ZUM STRAHLUNGSHÄRTEN EINER ELEKTRONISCHEN SCHALTUNG DURCH AUFTEILEN

METHOD FOR THE RADIATION HARDENING OF AN ELECTRONIC CIRCUIT BY PARTITIONING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2012 FR 1261439**

(43) Date de publication de la demande:
**07.10.2015 Bulletin 2015/41**

(73) Titulaire: **Electricité de France**
**75008 Paris (FR)**

(72) Inventeurs:
* **COUSIN, Bastien**
  **77000 Melun (FR)**
* **DELEUZE, Gilles**
  **75013 Paris (FR)**
* **CRETINON, Laurent**
  **69250 Poleymieux au Mont d'Or (FR)**
* **GONCALVES DOS SANTOS, Gutemberg, Jr.**
  **75013 Paris (FR)**
* **NAVINER, Lirida**
  **93150 Le Blanc Mesnil (FR)**

(74) Mandataire: **Regimbeau**
**20, rue de Chazelles**
**75847 Paris Cedex 17 (FR)**

(56) Documents cités:
* **KASTENSMIDT F L ET AL: "On the Optimal Design of Triple Modular Redundancy Logic for SRAM-based FPGAs", DESIGN, AUTOMATION AND TEST IN EUROPE, 2005. PROCEEDINGS MUNICH, GERMANY 07-11 MARCH 2005, PISCATAWAY, NJ, USA,IEEE, 7 mars 2005 (2005-03-07), pages 1290-1295, XP010780217, ISBN: 978-0-7695-2288-3**
* **MANUZZATO A ET AL: "Sensitivity evaluation of TMR-hardened circuits to multiple SEUs induced by alpha particles in commercial SRAM-based FPGAs", DEFECT AND FAULT-TOLERANCE IN VLSI SYSTEMS, 2007. DFT '07. 22ND IEEE INTERNATIONAL SYMPOSIUM ON, IEEE, PISCATAWAY, NJ, USA, 26 septembre 2007 (2007-09-26), pages 79-86, XP031337800, ISBN: 978-0-7695-2885-4**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

L'invention se rapporte au domaine des techniques de durcissement de circuits électroniques, plus particulièrement aux techniques de durcissement logique utilisant la redondance modulaire.

ART ANTERIEUR

La plupart des composants électroniques de circuits électroniques sont sensibles à des rayonnements électromagnétiques pouvant générer des fautes logiques transitoires (« Single Event Transient » en anglais).

La redondance modulaire triple (en anglais, TMR pour « Triple Modular Redundancy ») est une technique de durcissement logique consistant à introduire de la redondance dans un circuit électronique au stade de sa conception.

Le document "On the Optimal Design of Triple Modular Redundancy for SRAM-based FPGAs" par Kastensmidt et al décrit un procédé de durcissement logique par partitionement en utilisant des arbitres primaires.

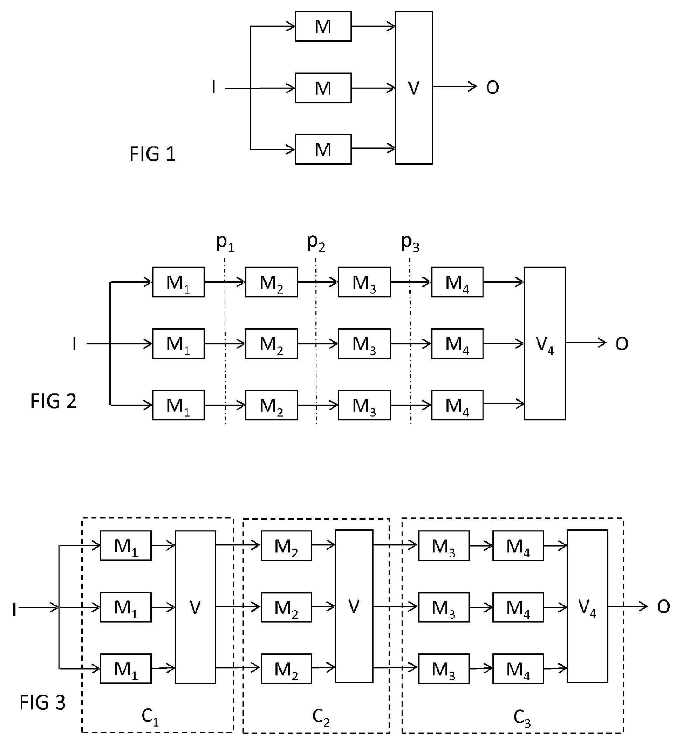

En référence à la figure 1, un module M assurant une fonction donnée est remplacé selon cette technique par un bloc TMR constitué de trois modules M identiques en parallèle réalisant la même fonction, et d'un arbitre placé à leurs sorties respectives. L'arbitre réalise un vote majoritaire à partir des signaux de sortie des trois modules répliqués et produit un signal de sortie non ambigu grâce au nombre impair de ces modules. Ce signal de sortie est correct même si l'un des trois modules est défaillant, ce qui peut constituer une efficacité suffisante dans de nombreux cas pratiques. L'occurrence de plusieurs fautes simultanées produira néanmoins une sortie erronée.

Une première catégorie de techniques de durcissement logique propose de sélectionner dans un circuit complexe sans redondance des sous-circuits particulièrement sensibles aux fautes et de remplacer chaque sous-circuit identifié par un bloc TMR assurant la même fonction. On parle alors de techniques STMR, « Selective TMR » en anglais, car certaines parties du circuit ne sont pas répliquées.

Les techniques STMR ne sont toutefois pas adaptées aux circuits qui requièrent un très haut niveau de fiabilité, comme par exemple les circuits potentiellement intégrés dans les matériels électriques de contrôle-commande des centrales nucléaires.

Une autre catégorie de techniques de durcissement logique dites par partitionnement propose d'insérer des arbitres supplémentaires dans un circuit formant déjà dans son ensemble un bloc TMR sur une série de N modules $M_1, ..., M_N$. L'insertion d'arbitres divise le circuit en partitions comprenant chacune un arbitre. La contrainte de faute unique évoquée précédemment est alors restreinte à chaque partition. Ainsi, s'il y a J partitions $C_1, ..., C_J$ le circuit peut être tolérant jusqu'à J fautes simultanées, à condition qu'il n'y ait pas plus d'une faute par partition.

Toutefois, les arbitres à vote majoritaire sont des composants particulièrement onéreux car ils requièrent un haut niveau de fiabilité interne. Par conséquent, le durcissement par partitionnement entraîne donc un surcoût de fabrication et une augmentation de la surface du circuit importants.

PRESENTATION DE L'INVENTION

L'invention propose une technique de durcissement par partitionnement permettant d'optimiser le nombre d'arbitres insérés pour garantir un niveau de fiabilité déterminé pour le circuit sans pour autant engendrer un surcoût de fabrication trop important ou augmenter de manière trop importante la surface du circuit.

Ce but est atteint par un procédé de durcissement logique par partitionnement d'un circuit électronique comprenant un nombre impair K de branches en parallèle connectées à une même entrée primaire I et comprenant chacune une même série de N modules et N-1 noeuds joignant deux modules consécutifs, les K branches formant ensemble une succession de N-1 portes constituées respectivement de K noeuds en parallèle, et un arbitre primaire réalisant un vote majoritaire à partir des signaux de sortie des K branches, le procédé étant caractérisé en ce qu'il comprend les étapes suivantes répétées pour chacune des portes prises successivement depuis la porte la plus proche de l'entrée primaire :

- La détermination d'une fiabilité d'un sous-circuit en amont de la porte constitué par les portions des K branches comprises entre l'entrée primaire et la porte, et
- L'insertion d'au moins un arbitre à la porte réalisant un vote majoritaire à partir des signaux de sortie desdites portions de branches constituant le sous-circuit balayé, et délivrant au moins un signal majoritaire aux entrées respectives d'un sous-circuit complémentaire constitué par les portions de branches en aval de la porte, si la fiabilité du sous-circuit balayé est inférieure à une consigne de fiabilité.

Un avantage de la présente invention est la réduction du coût de fabrication. Un autre avantage de la présente invention est qu'elle est facilement automatisable.

Avantageusement, l'étape d'insertion d'au moins un arbitre comprend l'insertion d'un arbitre délivrant un unique signal majoritaire aux entrées respectives du sous-circuit complémentaire. En variante, l'étape d'insertion d'au moins un arbitre comprend l'insertion de K arbitres en parallèle délivrant chacun un signal majoritaire à l'une des entrées respectives du sous-circuit complémentaire.

Par ailleurs, l'invention concerne également un produit programme d'ordinateur comprenant des instructions de code pour l'exécution du procédé de durcissement décrit précédemment, lorsque ce produit programme est exécuté par des moyens de traitement de données.

DESCRIPTION DES FIGURES

La figure 1 représente un circuit comprenant un module protégé par redondance modulaire triple.

La figure 2 représente un circuit comprenant une série de quatre modules, protégé par redondance modulaire triple.

La figure 3 représente un exemple de circuit résultant d'un durcissement par partitionnement appliqué sur le circuit de la figure 2.

Les figures 4A, 4B et 4C représentent l'évolution de la fiabilité d'un circuit en fonction du nombre de portes qu'il contient.

La figure 5 est un diagramme d'étapes du procédé de durcissement par partitionnement selon l'invention.

Les figures 6A et 6B présentent deux modes de réalisations d'arbitres insérés au cours du procédé selon l'invention.

DESCRIPTION DETAILLEE DE L'INVENTION

Va d'abord être décrit en détail un circuit initial avant durcissement logique par partitionnement.

Le circuit comprend un nombre impair K de branches principales en parallèle connectées à une même entrée primaire I, conformément à la technique connue de redondance modulaire d'ordre K.

Les K branches comportent chacune une même série de N modules $M_{i,\ i\epsilon\ [\![1,N]\!]}$, $M_1$ étant le module le plus proche de l'entrée primaire I du circuit et $M_N$ le module le plus éloigné de celle-ci.

La série de N modules réalise la fonction logique globale du circuit. Chacun des modules de cette série est un sous-circuit assurant lui-même une sous-fonction logique et comporte une entrée et une sortie. Un module peut donc être complexe ou assurer une fonction logique élémentaire, comme par exemple un inverseur.

Chaque branche comporte par ailleurs N-1 noeuds assurant la connexion entre deux modules consécutifs. Par convention, on appellera porte $p_i$ de niveau i l'ensemble des K noeuds parallèles du circuit faisant chacun connexion entre un module $M_i$ et son successeur $M_{i+1}$ dans une branche spécifique. Le circuit comprend donc N-1 portes $p_{i,i\epsilon\ [\![1,N-1]\!]}$.

Un arbitre primaire $V_N$ est placé en sortie des K branches, plus précisément en sortie des K derniers modules $M_N$ de chaque branche. Ainsi, cet arbitre $V_N$ réalise un vote majoritaire à partir des signaux de sortie des K branches et délivre un signal majoritaire à au moins une sortie primaire O.

La figure 2 est un exemple de circuit conforme à la description précédente où le nombre de branches K est 3 et le nombre N de modules est 4 : dans ce circuit, l'arbitre $V_4$ est placé en sortie de 3 branches comprenant chacune une série de quatre modules $M_1$, $M_2$, $M_3$ et $M_4$ et trois portes $p_1$, $p_2$ et $p_3$ intercalées entre deux modules consécutifs ; chacune de ces portes comprend trois noeuds localisés sur une branche distincte.

La figure 3 représente le circuit de la figure 2 après un exemple de partitionnement conforme à l'invention. Ont été insérés dans ce circuit des arbitres aux portes $p_1$ et $p_2$, mais pas à la porte $p_3$. Ainsi, le circuit résultant comprend trois partitions $C_1$, $C_2$ et $C_3$.

Une unité de mesure représentative de la fiabilité d'un circuit est la probabilité d'un signal correct en sa sortie. Dans la suite du présent document, le terme « fiabilité » désignera donc cette unité de mesure. Plusieurs méthodes pour mesurer la fiabilité sont connues de l'art antérieur: par exemple, la méthode SPR présentée dans le document « SPR Tool : Signal Reliability Analysis of Logic Circuits » par Franco et al., ou encore la méthode PTM exploitant des matrices de transfert.

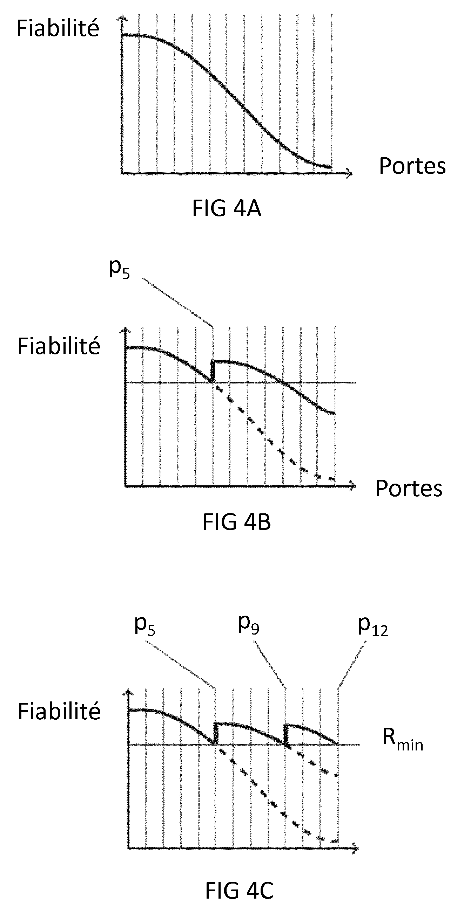

Est représenté en figure 4A l'évolution de la fiabilité d'un signal en fonction du nombre de portes dans un circuit non partitionné. De manière générale, on constate que plus un circuit a un nombre important de portes (en d'autres termes, un nombre important de modules) plus la fiabilité du signal en sortie de ce circuit est faible.

Cependant, lorsqu'un arbitre à vote majoritaire est inséré à une porte, la fiabilité du signal en cette porte augmente grâce au vote majoritaire effectué par l'arbitre inséré. La figure 4B représente schématiquement la courbe de fiabilité du même circuit après insertion d'un arbitre à la porte $p_5$.

De la même manière, la figure 4C représente schématiquement la courbe de fiabilité du même circuit après insertion d'arbitres aux portes $p_5$, $p_9$ et $p_{12}$. Grâce à ces arbitres, la fiabilité du circuit est maintenue supérieure à une valeur $R_{min}$.

Le procédé de durcissement selon l'invention va maintenant être décrit. Soit $R_{min}$ une consigne de fiabilité minimale à respecter pour un circuit non partitionné. L'objectif à atteindre est l'obtention d'un circuit partitionné dont la fiabilité du signal mesuré à sa sortie primaire O est supérieure ou égale à cette consigne $R_{min}$.

Dans le procédé selon l'invention, les portes d'un circuit sont balayées successivement d'amont en aval, c'est-à-dire depuis la porte la plus proche $p_1$ de l'entrée primaire I jusqu'à la porte $p_{N-1}$ la plus éloignée de celle-ci.

On se place donc d'abord à la porte la plus proche $p_1$.

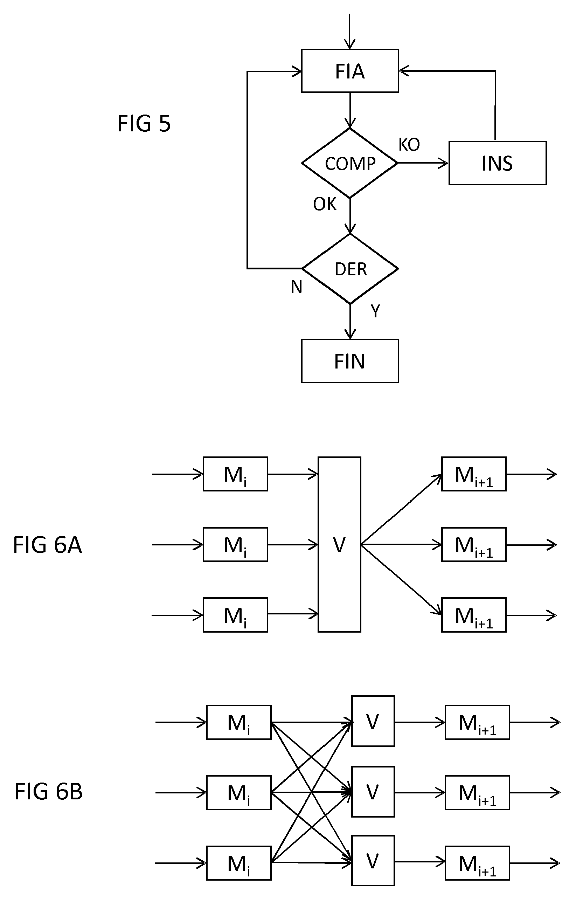

En référence au diagramme de la figure 5, est déterminée dans une première étape FIA une fiabilité $R_1$

du sous-circuit compris entre l'entrée primaire I et la porte $p_1$, constitué de K portions de branches parallèles comprenant chacune un même module $M_1$.

La fiabilité $R_1$ déterminée est ensuite comparée COMP avec la consigne de fiabilité $R_{min}$ :

- Si $R_1 \geq R_{min}$ alors le sous-circuit en amont de la porte $p_1$ comprenant K modules $M_1$ est considéré fiable (OK) ;
- Si $R_1 < R_{min}$ alors le sous-circuit en amont de la porte $p_1$ comprenant K modules $M_1$ (KO) est considéré comme n'étant pas suffisamment fiable et dans ce cas une insertion INS d'au moins un arbitre V est réalisée à la porte $p_1$. L'au moins un arbitre V inséré réalise un vote majoritaire des signaux de sortie des K modules $M_1$ et délivre un signal majoritaire de fiabilité supérieure à $R_1$ en entrée des K modules $M_2$.

Les étapes illustrées sur le diagramme de la figure 5 sont répétées pour chacune des N-1 portes du circuit décrit précédemment.

De manière générale en toute porte $p_i$, le sous-circuit en amont de la porte $p_i$ comprend K portions de branches parallèles comprenant chacune une série de i modules $M_1$, ..., $M_i$ et le sous-circuit complémentaire en aval de la porte $p_i$ comprend K portions de branches parallèles comprenant chacune une série de N-i modules $M_{i+1}$, ..., $M_N$.

Au cours de l'étape FIA est déterminée la fiabilité $R_i$ du sous-circuit en amont de la porte $p_i$.

La fiabilité $R_i$ déterminée est ensuite comparée COMP avec la consigne de fiabilité $R_{min}$ :

- Si $R_i \geq R_{min}$ alors le sous-circuit en amont de la porte $p_i$ est considéré fiable (OK) ;
  On vérifie ensuite dans un test DER le niveau i de la porte $p_i$.

    - Si $i < N - 1$, on se place à la porte suivante en aval $p_{i+i}$.
    - Si $i = N - 1$, toutes les portes ont été balayées et le procédé se termine (FIN) ;

- Si $R_i < R_{min}$ alors le sous-circuit en amont de la porte $p_i$ est considéré non suffisamment fiable (KO) et dans ce cas une insertion INS d'au moins un arbitre V est réalisée à la porte $p_i$. L'au moins un arbitre V inséré réalise un vote majoritaire des signaux de sortie des K portions de branches du sous-circuit en amont de la porte $p_i$ (dont le dernier module est $M_i$) et délivre un signal majoritaire de fiabilité supérieure à $R_{min}$ en entrée des K portions de branches du circuit complémentaire en aval (dont le premier module est $M_{i+1}$).

Une fois toutes les portes balayées, J arbitres ont été insérées en J portes du circuit, où $0 \leq J \leq N - 1$, en plus de l'arbitre primaire $V_N$. Le circuit résultant comprend alors J+1 partitions ($C_1$, ..., $C_{J+1}$) comprenant chacune un sous-circuit constitué par K portions des branches en parallèle et un arbitre V inséré à la sortie desdites portions. Dans le circuit illustré en figure 3, deux arbitres V ont été insérés en plus de l'arbitre primaire $V_4$ si bien que le circuit résultant comprend trois partitions $C_1$, $C_2$, $C_3$.

Le procédé introduit par conséquent un nombre de partitions minimal dans le circuit initial pour obtenir un circuit résultat ayant une fiabilité d'au moins $R_{min}$.

Il est connu de l'art antérieur que le partitionnement théorique d'un circuit donnant un gain de fiabilité maximum est un partitionnement dont les partitions ont toutes une fiabilité égale. Or, de manière surprenante, le procédé selon l'invention donne des résultats très proches de cet optimum malgré sa simplicité.

L'étape d'insertion INS peut faire l'objet de plusieurs variantes.

Dans un premier mode de réalisation illustré par la figure 6A, l'étape d'insertion exécutée à la porte $p_i$ comprend l'insertion d'un seul arbitre délivrant un unique signal majoritaire aux entrées respectives du sous-circuit en aval de la porte $p_i$, dont le premier module sur chaque branche est $M_{i+1}$.

L'avantage de ce mode de réalisation réside dans son caractère économique : à une porte donnée, un seul composant arbitre est en effet nécessaire et un seul vote majoritaire est réalisé pendant la mise en fonctionnement du circuit.

En variante illustrée en figure 6B, l'étape d'insertion exécutée à la porte $p_i$ comprend l'insertion de K arbitres en parallèle délivrant chacun un signal majoritaire à l'une des entrées respectives du sous-circuit en aval de la porte $p_i$ dont le premier module est $M_{i+1}$.

Cette variante améliore encore la fiabilité du circuit car elle permet de pallier une défaillance éventuelle d'une minorité des K arbitres. Prenons par exemple le cas $K = 3$ (redondance modulaire triple). Si l'un des 3 arbitres V placés à la porte $p_i$ subit une défaillance il génère un signal majoritaire erroné qui sera transmis à une seule des K branches du sous-circuit en aval de la porte $p_i$. L'arbitre suivant, l'arbitre primaire $V_N$ le cas échéant, pourra alors éliminer cette erreur en réalisant à son tour un vote majoritaire.

On notera que le circuit de topologie particulière sur lequel le procédé de durcissement présenté dans ce document est appliqué peut être une portion d'un circuit de topologie libre, cette portion définissant un chemin de signal entre une entrée primaire I et une sortie primaire O.

En d'autres termes, le procédé de durcissement peut être répété sur chacun des $i * j$ sous-circuits définissant un chemin de signal dans un circuit comprenant $i$ entrées primaires et $j$ sorties primaires.

**Revendications**

1. Procédé de durcissement logique par partitionnement d'un circuit électronique, le procédé étant mis en oeuvre par ordinateur et comprenant:

- Un nombre impair K de branches en parallèle connectées à une même entrée primaire (I) et comprenant chacune une même série de N modules ($M_1$, ..., $M_N$) et N-1 noeuds joignant deux modules consécutifs, les K branches formant ensemble une succession de N-1 portes ($p_1$, ..., $p_{N-1}$) constituées respectivement de K noeuds en parallèle, et
- un arbitre primaire ($V_N$) réalisant un vote majoritaire à partir des
signaux de sortie des K branches,
le procédé étant **caractérisé en ce qu'**il comprend les étapes suivantes répétées pour chacune des portes ($p_1$, ..., $p_i$, ..., $p_{N-1}$) prises successivement depuis la porte la plus proche ($p_1$) de l'entrée primaire (I) :
- La détermination (FIA) d'une fiabilité $R_i$ d'un sous-circuit en amont de la porte ($p_i$) constitué par les portions des K branches comprises entre l'entrée primaire et la porte ($p_i$),
- L'insertion (INS) d'au moins un arbitre ($V_i$) à la porte ($p_i$) réalisant un vote majoritaire à partir des signaux de sortie desdites portions de branches constituant le sous-circuit balayé, et délivrant au moins un signal majoritaire aux entrées respectives d'un sous-circuit complémentaire constitué par les portions de branches en aval de la porte ($p_i$), si la fiabilité $R_i$ du sous-circuit balayé est inférieure à une consigne de fiabilité $R_{min}$.

2. Procédé de durcissement selon la revendication 1, dans lequel l'étape d'insertion d'au moins un arbitre comprend l'insertion d'un arbitre délivrant un unique signal majoritaire aux entrées respectives du sous-circuit complémentaire.

3. Procédé de durcissement selon l'une des revendications 1 à 2, dans lequel l'étape d'insertion d'au moins un arbitre comprend l'insertion de K arbitres en parallèle délivrant chacun un signal majoritaire à l'une des entrées respectives du sous-circuit complémentaire.

4. Produit programme d'ordinateur comprenant des instructions de code pour l'exécution du procédé selon l'une des revendications 1 à 3, lorsque ce produit programme est exécuté par des moyens de traitement de données.

**Patentansprüche**

1. Verfahren zum logischen Härten durch Partitionierung einer elektronischen Schaltung, wobei das Verfahren per Computer umgesetzt wird und Folgendes umfasst:

- eine ungerade Anzahl K an parallelen Zweigen, welche mit demselben primären Eingang (I) verbunden sind und jeweils den gleichen Satz an N Modulen ($M_1$, ..., $M_N$) und N-1 Knoten umfassen, welche zwei aufeinanderfolgende Module miteinander verbinden, wobei die K Zweige zusammen eine Abfolge an N-1 Gates ($p_1$, ..., $p_{N-1}$) bilden, welche jeweils aus K parallelen Knoten bestehen, und
- einen primären Arbiter ($V_N$), welcher ausgehend von den Ausgangssignalen der K Zweige eine Mehrheitsentscheidung trifft,
wobei das Verfahren **dadurch gekennzeichnet ist, dass** es die folgenden wiederholten Schritte für jedes der Gates ($p_1$, ..., $p_i$, ..., $p_{N-1}$) umfasst, welche nacheinander ab dem primären Eingang (I) am nächsten gelegenen Gate ($p_1$) ergriffen werden:
- Ermitteln (FIA) einer Zuverlässigkeit $R_i$ einer Teilschaltung vor dem Gate ($p_i$), welche aus den Abschnitten der K Zweige, die zwischen dem primären Eingang und dem Gate ($p_i$) umfasst sind, besteht,
- Einfügen (INS) von mindestens einem Arbiter ($V_i$) in das Gate ($p_i$), welcher eine Mehrheitsentscheidung ausgehend von den Ausgangssignalen der besagten Zweigabschnitte, aus welchen die abgetastete Teilschaltung besteht, trifft und mindestens ein Mehrheitssignal an die jeweiligen Eingänge einer komplementären Teilschaltung bereitstellt, welche aus den Zweigabschnitten hinter dem Gate ($p_i$) besteht, wenn die Zuverlässigkeit $R_i$ der abgetasteten Teilschaltung niedriger ist als ein Zuverlässigkeitssollwert $R_{min}$.

2. Verfahren zum Härten nach Anspruch 1, wobei der Schritt des Einfügens von mindestens einem Arbiter das Einfügen eines Arbiters umfasst, welcher ein einziges Mehrheitssignal an die jeweiligen Eingänge der komplementären Teilschaltung bereitstellt.

3. Verfahren zum Härten nach einem der Ansprüche 1 bis 2, wobei der Schritt des Einfügens von mindestens einem Arbiter das Einfügen von K parallelen Arbitern umfasst, welche jeweils ein Mehrheitssignal an einen der jeweiligen Eingänge der komplementären Teilschaltung bereitstellen.

4. Computerprogrammprodukt, welches Codeanweisungen zum Ausführen des Verfahrens nach einem der Ansprüche 1 bis 3 umfasst, wenn dieses Programmprodukt von Datenverarbeitungsmitteln ausgeführt wird.

**Claims**

1.  Logic hardening method by partitioning of an electronic circuit, the method being implemented by computer and comprising:

    - an odd number K of branches in parallel connected to the same primary input (I) and each comprising the same series of N modules ($M_1$, ..., $M_N$) and N-1 nodes joining two consecutive modules, the K branches together forming a succession of N-1 gates ($p_i$, ..., $p_{N-1}$) constituted respectively by K nodes in parallel, and
    - a primary arbiter ($V_N$) forming a majority vote from the output
    signals of the K branches,
    the method being **characterized in that** it comprises the following steps repeated for each of the gates ($p_1$, ... , $p_i$ ... , $p_{N-1}$) taken successively from the closest gate ($p_1$) to the primary input (I):
    - determination (FIA) of reliability $R_i$ of a sub-circuit upstream of the gate ($p_i$) constituted by the portions of the K branches located between the primary input and the gate ($p_i$),
    - insertion (INS) of at least one arbiter ($V_i$) at the gate ($p_i$) performing a majority vote from the output signals of said portions of branches constituting the scanned sub-circuit, and delivering at least one majority signal to the respective inputs of a complementary sub-circuit constituted by the portions of branches downstream from the gate ($p_i$), if the reliability $R_i$ of the scanned sub-circuit is less than a reliability set point $R_{min}$.

2.  Hardening method according to claim 1, wherein the insertion step of at least one arbiter comprises the insertion of an arbiter delivering a single majority signal to the respective inputs of the complementary sub-circuit.

3.  Hardening method according to one of claims 1 to 2, wherein the insertion step of at least one arbiter comprises insertion of K arbiters in parallel each delivering a majority signal to one of the respective inputs of the complementary sub-circuit.

4.  Computer program product comprising code instructions for execution of the method according to one of claims 1 to 3, when this program product is executed by data-processing means.

FIG 1

FIG 2

$p_1$   $p_2$   $p_3$

FIG 3

$C_1$   $C_2$   $C_3$

Fiabilité

Portes

FIG 4A

$p_5$

Fiabilité

Portes

FIG 4B

$p_5$   $p_9$   $p_{12}$

Fiabilité

$R_{min}$

FIG 4C

FIG 5

FIA

COMP

KO

INS

OK

DER

N

Y

FIN

FIG 6A

$M_i$

$M_i$

$M_i$

V

$M_{i+1}$

$M_{i+1}$

$M_{i+1}$

FIG 6B

$M_i$

$M_i$

$M_i$

V

V

V

$M_{i+1}$

$M_{i+1}$

$M_{i+1}$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KASTENSMIDT.** *On the Optimal Design of Triple Modular Redundancy for SRAM-based FPGAs*